# FASCICULE DE BREVET EUROPEEN

(11) **EP 3 666 569 B1**
(45) Date de publication et mention de la délivrance du brevet: **10.05.2023**
(21) Numéro de dépôt: 19214633.0
(22) Date de dépôt: 10.12.2019
(51) Int. Cl.: B60J 10/79, B60J 10/265, B60J 10/78

(54) **PORTE DE VÉHICULE DU TYPE FLUSH**
BÜNDIGE FAHRZEUGTÜR
FLUSH TYPE VEHICLE DOOR

(30) Priorité: 10.12.2018 FR 1872637
(43) Date de publication de la demande: 17.06.2020
(73) Titulaire: HUTCHINSON, 75008 Paris (FR)
(72) Inventeur: BLOTTIAU, Olivier, 45120 CEPOY (FR); LAJOUX, Cyril, 45700 VIMORY (FR)
(74) Mandataire: Gevers & Orès

(56) Documents cités:
- CA-A1- 2 983 661
- DE-A1-102017 004 131
- FR-A1- 2 858 950
- US-A- 4 653 230
- US-A- 5 199 761
- US-A1- 2016 121 701

## Description

### Domaine technique de l'invention

La présente invention concerne notamment une porte de véhicule du type « flush » ainsi qu'un procédé de montage de cette porte.

### Arrière-plan technique

L'arrière-plan technique comprend notamment le document DE-A1-10 2017 004131.

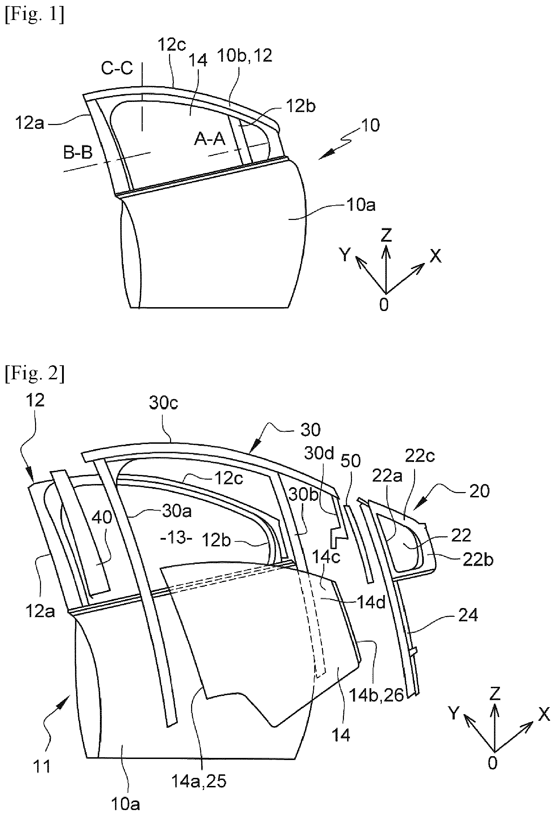

Un véhicule comprend des portes qui comportent chacune en général au moins une vitre. Comme cela est visible à la figure 1, une porte 10 comprend une partie basse 10a et une partie haute 10b qui forme un cadre 12 destiné à entourer la vitre 14. Lorsque cette vitre 14 est mobile, elle peut être déplacée de la partie haute 10b dans la partie basse 10a. Le cadre 12 a une forme générale en U inversé et comprend deux montants ascendants 12a, 12b reliées par un rail supérieur 12c.

Dans la présente demande, on entend par « ascendant », un élément qui a une forme générale allongée et s'étend sensiblement du bas vers le haut, ou du haut vers le bas, par exemple verticalement.

La plupart des portes, qui sont destinées à équiper des véhicules de gamme standard, sont du type « non flush », c'est-à-dire que leurs vitres n'ont pas leurs surfaces extérieures alignées avec des surfaces extérieures des éléments qui s'étendent au moins en partie autour des vitres, tels que des enjoliveurs par exemple.

Dans la présente demande, on entend par « enjoliveur », tout élément de finition pour une porte de véhicule, et concerne notamment les appliqués, les profilés métalliques ou métallisés, etc.

Pour une gamme plus luxueuse de véhicule, il est connu de les équiper de portes « flush ». Ce type de porte a sa vitre mobile dont la surface extérieure est alignée avec des surfaces extérieures d'éléments avoisinants. Cet alignement ou affleurement confère un aspect esthétique recherché par la clientèle.

La présente invention propose un perfectionnement à une porte « flush » qui permet notamment de faciliter son montage et son rendu final.

### Résumé de l'invention

L'invention propose une porte de véhicule selon la revendication 1.

L'invention propose ainsi une porte conçue pour conférer un aspect « flush » entre les vitres fixe et mobile et entre ces vitres et des enjoliveurs de la porte.

La porte selon l'invention peut comprendre une ou plusieurs des caractéristiques suivantes, prises isolément les unes des autres ou en combinaison les unes avec les autres :
- ledit corps comprend une embase de fixation à une surface intérieure de la vitre fixe, ledit revêtement surmoulé comportant une première portion intercalée entre l'embase et la surface intérieure de la vitre fixe, et une seconde portion recouvrant ledit bord ascendant de la vitre fixe,
- ladite fente comprend une seconde paroi latérale comportant des orifices d'encliquetage élastique de crochets portés par ladite patte,
- ledit second enjoliveur a en section une forme générale en L,
- le second enjoliveur comprend une paroi s'étendant parallèlement aux vitres fixe et mobile, et entre celles-ci, cette paroi comportant ladite surface extérieure du second enjoliveur,
- la paroi dudit second enjoliveur comporte en outre une surface intérieure sur laquelle est située en saillie ou en retrait une nervure ascendante sensiblement parallèle audit bord ascendant,
- lesdits brins ascendants comportent chacun une branche extérieure, une branche intérieure et une branche médiane de liaison des branches intérieure et extérieure,
- la branche extérieure de l'un au moins desdits brins ascendants comporte une première rainure ascendante orientée vers l'extérieur et dans lequel est au moins en partie engagée une nervure ascendante dudit enjoliveur correspondant,
- la branche extérieure de l'un au moins desdits brins ascendants comporte une seconde rainure ascendante orientée vers l'intérieur et dans lequel peut être au moins en partie engagé au moins un crochet d'un desdits guides.
- ledit brin supérieur comprend une agrafe en U de fixation sur ledit rail supérieur,
- ledit brin supérieur comprend un prolongement qui s'étend autour d'une partie de la vitre fixe et le long d'un desdits montants ascendants,
- au moins un desdits premier et second enjoliveurs est réalisé d'une seule pièce à partir de deux matériaux,
- le joint de coulisse est monobloc.

La présente invention concerne encore un véhicule, comportant au moins une porte telle que décrite ci-dessus.

La présente invention concerne également un procédé de montage d'une porte telle que décrite ci-dessus, dans lequel il comprend les étapes de :
- montage du module à vitre fixe encapsulée sur le bâti,
- montage du joint de coulisse,
- montage de la vitre mobile, et
- montage des premier et second enjoliveurs.

De préférence, lors de l'étape b), le brin supérieur du joint de coulisse est monté sur ledit rail supérieur par une translation de ce brin supérieur dans une direction sensiblement perpendiculaire à un plan du cadre supérieur du bâti de porte et orientée vers l'intérieur de la porte.

Avantageusement, le second enjoliveur est fixé par encliquetage élastique sur ledit profilé ascendant.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
la figure 1 est une vue schématique en perspective d'une porte de véhicule,
la figure 2 est une vue schématique en perspective éclatée de la porte de la figure 1,
la figure 3 est une vue schématique en perspective de certains éléments de la porte de la figure 1,
la figure 4 est une vue schématique en coupe selon la ligne C-C de la figure 1,
la figure 5 est une vue schématique en coupe selon la ligne B-B de la figure 1,
la figure 6 est une vue schématique en coupe selon la ligne A-A de la figure 1, et
la figure 7 est une vue similaire à celle de la figure 6 et montre une variante de réalisation,
la figure 8 est une vue similaire à celle de la figure 6 et montre une variante de réalisation, et
la figure 9 est une vue similaire à celle de la figure 6 et ne fait pas partie de l'invention.

### Description détaillée de l'invention

Dans la description qui suit et en référence aux dessins, on utilise un repère tridimensionnel dont l'axe X est horizontal et orienté dans la direction de déplacement du véhicule, l'axe Y est horizontal et orienté vers l'intérieur du véhicule, et l'axe Z est vertical et orienté vers le haut. Les termes « avant » et « arrière » font référence à l'avant et à l'arrière du véhicule par rapport à l'axe X. Les termes « intérieur » et « extérieur » font référence à l'intérieur et à l'extérieur du véhicule par rapport à l'axe Y. Enfin, les termes « inférieur » ou « bas/basse » et « extérieur » ou « haut/haute » font référence au bas ou au haut du véhicule par rapport à l'axe Z.

Les figures 1 à 3 montrent une porte 10 d'un véhicule, qui comporte un bâti 11, un module 20 à vitre fixe encapsulée, une vitre mobile 14, un joint de coulisse 30, et des enjoliveurs 40, 50. Dans l'exemple représenté, la porte 10 est une porte avant de véhicule.

Le bâti 11 comporte une partie basse 10a et un cadre supérieur 12 définissant une ouverture 13, ce cadre supérieur comportant deux montants ascendants, respectivement arrière 12a et avant 12b, reliés par un rail supérieur 12c.

Le module 20 a une forme générale en P et comporte une vitre fixe 22 montée dans une partie, ici avant, de l'ouverture 13, et un profilé ascendant 24 s'étendant le long d'un bord ascendant, ici arrière 22a, de la vitre fixe 22 et s'étendant le long de l'ouverture 13 et en deçà d'une ligne ceinture de caisse dans le bâti. Elle s'étend donc au moins en partie dans la partie basse 20a du bâti 11. La vitre fixe 22 comprend un bord ascendant avant 22b s'étendant le long du montant arrière 12b. Les surfaces intérieure et extérieure de la vitre 22 sont respectivement désignées par les références 22c et 22d.

La vitre mobile 14 est apte à fermer le reste de l'ouverture 13, en arrière de la vitre fixe 22. La vitre 14 comporte deux bords ascendants, respectivement arrière 14a et avant 14b, le long desquels sont fixés des guides 25, 26. Chaque guide 25, 26 a une forme allongée et est fixé par toute technique appropriée et par exemple par collage sur une surface intérieure 14c de la vitre 14. La surface extérieure de la vitre 14 est désignée par la référence 14d.

Le joint de coulisse 30 a une forme générale en U inversé et comporte deux brins ascendants, respectivement arrière 30a et avant 30b, reliés par un brin supérieur 30c. Le brin arrière 30a s'étend le long du montant arrière 12a, et le brin avant 30b s'étend le long du profilé 24. Le brin supérieur 30c se prolonge vers l'avant et est reliée à son extrémité avant à un brin ascendant 30d supplémentaire. Le prolongement du brin 30c s'étend le long du bord supérieur 22e de la vitre 22 et d'une partie avant du rail supérieur 12c. Le brin supplémentaire 30d s'étend le long du bord avant 22b de la vitre fixe 22 et du montant avant 12b.

Un premier enjoliveur, arrière 40, est rapporté sur le brin arrière 30a et fixé sur le montant arrière 12a. Un second enjoliveur, avant 50, est rapporté sur le brin avant 30b et fixé sur le profilé 24.

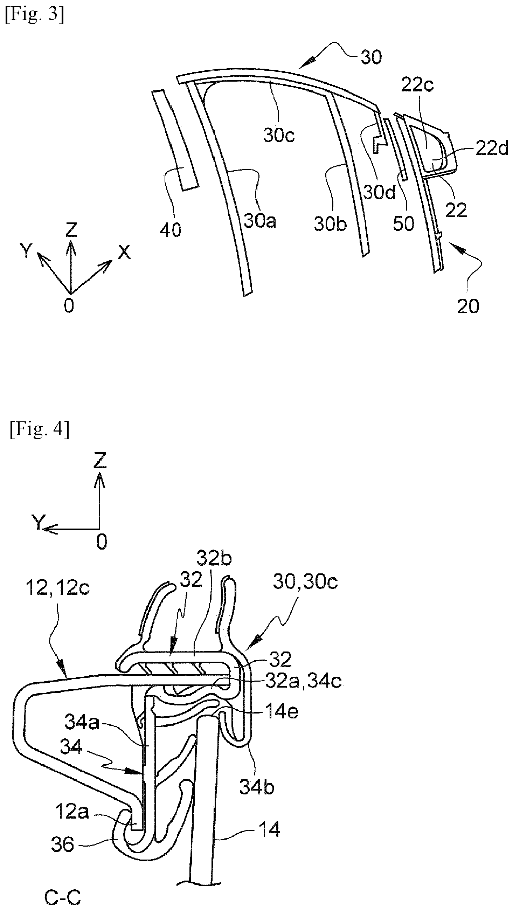

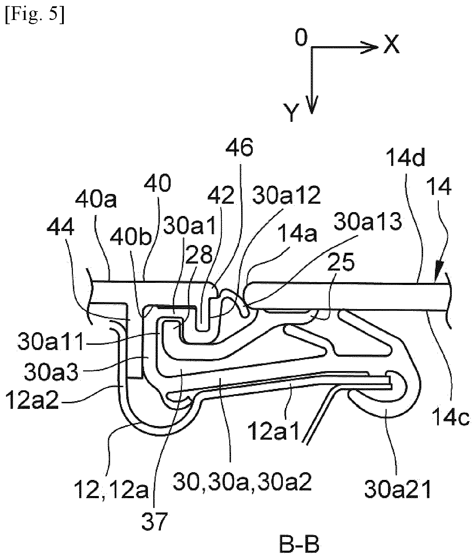

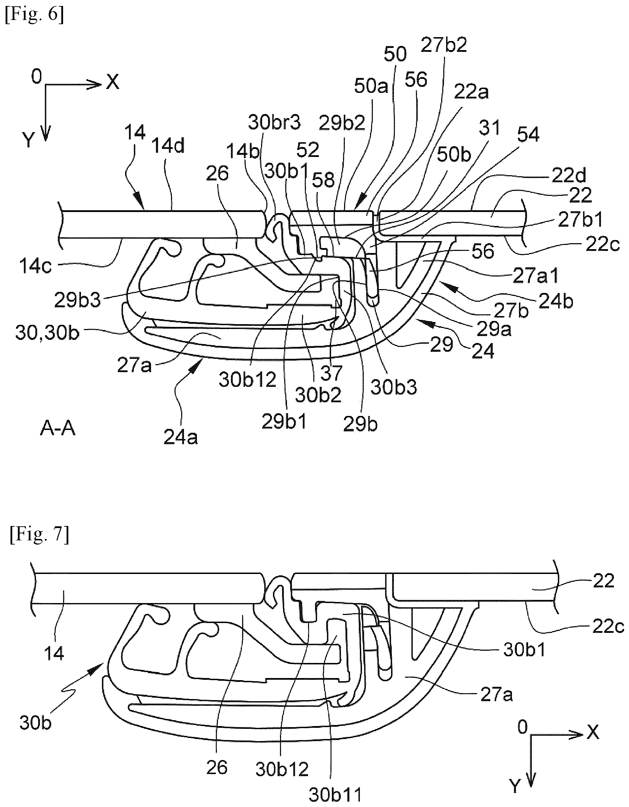

La porte 10 est du type « flush » décrit dans ce qui précède et les figures 6, 5 et 4 montrent respectivement des vues en coupe selon les lignes A-A, B-B et C-C de la figure 1. La figure 4 montre donc une vue en coupe du brin supérieur 30c et du rail supérieur 12c. La figure 5 montre une vue en coupe du montant arrière 12, du brin arrière 30a et de l'enjoliveur arrière 40, et la figure 6 montre une vue en coupe du brin avant 30b, de l'enjoliveur avant 50 et du profilé 24.

En référence à la figure 4, on constate que le rail supérieur 12c comprend une tôle pliée dont un bord longitudinal supérieur 12c1 est engagé dans une agrafe 32 à section en U du brin supérieur 30c. Le bord supérieur 12c1 est orienté vers l'extérieur et l'agrafe 32 est montée sur ce bord par translation de l'extérieur vers l'intérieur, jusqu'à ce que le bord 12c1 soit engagé au fond de l'ouverture de l'agrafe qui est donc orientée vers l'intérieur. L'agrafe 32 comprend deux parois latérales 32a, 32b, respectivement inférieure et supérieure, reliées entre elles par une paroi médiane extérieure 32c.

En plus de l'agrafe 32, le brin supérieur 30c comprend une portion 34 à section en U dont l'ouverture est orientée vers le bas et est destinée à recevoir le bord supérieur 14d de la vitre mobile 14. La portion 34 comprend deux parois latérales 34a, 34b, respectivement intérieure et extérieure, et reliées entre elles par une paroi médiane supérieure 34c. La paroi 34 comprend à son extrémité inférieure une patte 36 d'accrochage sur un bord longitudinal inférieur 12c1 du rail 12c.

Dans l'exemple représenté, l'agrafe 32 et la portion 34 sont combinées de sorte à limiter leur encombrement, les parois 32a et 34c sont ici confondues.

Le brin supérieur 30c comprend plusieurs lèvres d'étanchéité coopérant avec la vitre 14, le rail 12c ainsi que la carrosserie du véhicule.

En référence à la figure 5, le guide 25 est fixé sur la surface intérieure 14c de la vitre 14, le long de son bord ascendant arrière 14a. Le guide 25 a une forme allongée et s'étend le long de l'axe X au-delà du bord 14a pour être engagé dans une gorge longitudinale 37 du brin 30a. Le guide 25 peut en outre comprendre à son extrémité arrière, opposée à la vitre 14, au moins un crochet 28 de guidage et/ou de retenue qui est orienté vers l'extérieur.

Le brin arrière 30a a en section une forme générale en C pour définir la gorge 37 de réception du guide 25. Le brin 30a comporte deux branches, respectivement extérieure 30a1 et intérieure 30a2, reliées ensemble par une branche médiane 30a3.

La branche extérieure 30a1 a en section une forme générale en S et comprend une rainure ascendante 30a11 orientée vers l'intérieur et destinée à recevoir le ou les crochet(s) 28 du guide 25, et une rainure ascendante 30a12 orientée vers l'extérieur et destinée à recevoir une nervure ascendante 42 de l'enjoliveur 40. La rainure 30a11 est située entre la branche médiane 30a3 et la rainure 30a12. Par ailleurs, la branche 30a comporte à son extrémité libre avant une lèvre ascendante d'étanchéité 30a13 occupant l'espace entre l'enjoliveur 40 et le bord 14a de la vitre 14, et prenant appui sur ce bord 14a. Le brin 30 peut comprendre d'autres lèvres d'étanchéité destinées à coopérer avec la vitre 14, le guide 25, le montant 12a, etc.

La branche intérieure 30a2 est en appui vers l'intérieur sur une partie avant 12a1 du montant 12a dont une partie arrière 12a2 s'étend vers l'extérieur, en arrière de la branche 30a3, pour définir avec cette dernière un espace d'engagement d'une patte 44 de l'enjoliveur 40.

La branche intérieure 30a2 comprend à son extrémité avant une patte 30a21 d'accrochage sur un bord longitudinal avant de la partie 12a1.

L'enjoliveur 40 comprend une paroi ascendante 46 parallèle à l'axe X et comportant une surface intérieure 40b et une surface extérieure 40a qui est alignée avec la surface extérieure 14d de la vitre 14.

La nervure 42 et la patte 44, décrites dans ce qui précède, sont en saillie sur la surface intérieure 40b de la paroi. Elles sont sensiblement parallèles et la nervure 42 est située en avant de la patte 44, au voisinage du bord ascendant avant de la paroi. La nervure 42 a une dimension le long de l'axe Y qui est inférieure à celle de la patte 44. Cette nervure 42 est montée ajustée serrée dans la rainure 30a12 et permet de positionner avec précision et retenir le brin 30a. La patte 44 est également ajustée serrée entre la partie arrière 12a2 et la branche 30a3.

En référence à la figure 6, le guide 26 est fixé sur la surface intérieure 14c de la vitre 14, le long de son bord ascendant avant 14b. Le guide 26 a une forme allongée et s'étend le long de l'axe X au-delà du bord 14b pour être engagé dans une gorge longitudinale 37 du brin 30b.

Le brin avant 30b a en section une forme générale en C pour définir la gorge 37 de réception du guide 26. Le brin 30b comporte deux branches, respectivement extérieure 30b1 et intérieure 30b2, reliées ensemble par une branche médiane 30b3.

La branche extérieure 30b1 comprend une rainure ascendante 30b12 orientée vers l'extérieur et destinée à recevoir un ergot d'une nervure ascendante 52 de l'enjoliveur 50. Par ailleurs, la branche 30a comporte à son extrémité libre arrière une lèvre ascendante d'étanchéité 30b13 occupant l'espace entre l'enjoliveur 50 et le bord 14b de la vitre 14, et prenant appui sur ce bord 14b. Le brin 30 peut comprendre d'autres lèvres d'étanchéité destinées à coopérer avec la vitre 14, le guide 26 le montant 12b, etc.

La branche intérieure 30b2 est en appui vers l'intérieur sur une partie arrière 24a du profilé 24 dont une partie avant 24b est fixée à la vitre fixe 22.

Le profilé 24 a une forme générale en L et comprend la partie arrière 24a qui est sensiblement parallèle à l'axe X et la partie avant 24a qui s'étend vers l'extérieur, parallèlement à l'axe Y depuis l'extrémité avant de la partie 24a.

Le profilé 24 comprend un corps 27a en plastique rigide et un revêtement surmoulé 27b qui est configuré pour fixer le corps plastique à la vitre fixe 14. Le corps 27a comprend une embase 27a1 de fixation à la surface intérieure 22c de la vitre fixe 22. Le revêtement surmoulé 27b comporte une première portion 27b1 intercalée entre l'embase 27a1 et la surface intérieure 22c de la vitre fixe 22, et une seconde portion 27b2 recouvrant ledit bord ascendant 22a de la vitre fixe 22.

Le corps 27a comprend en outre une fente ascendante 29 de réception d'une patte 54 de l'enjoliveur 50. La fente 29 s'étend parallèlement à l'axe Y et comprend une première paroi latérale, ici avant 29a, sensiblement alignée avec le bord 22a ou la portion 27b2.

La fente 29 comprend une seconde paroi latérale, ici arrière 29b, comportant des orifices 31 d'encliquetage élastique de crochets 56 portés par la patte 54.

La paroi latérale 29b de la fente 29 est ici portée par une paroi à section en L du corps, une partie 29b1 de cette paroi s'étendant parallèlement à l'axe Y et comprenant les orifices 31, et une partie 29b2 s'étendant parallèlement à l'axe X, depuis l'extrémité extérieure de la parie 29b1 vers l'arrière. Cette partie 29b2 comprend une nervure ascendante 29b3 orientée vers l'arrière et engagée dans une encoche ascendante 58 de forme complémentaire de la nervure 52 de l'enjoliveur 50.

L'enjoliveur 50 comprend une paroi ascendante 56 parallèle à l'axe X et comportant une surface intérieure 50b et une surface extérieure 50a qui est alignée avec les surfaces extérieures 14d, 22d des vitres 14, 22. La nervure 52 et la patte 54 sont en saillie sur la surface intérieure 50b de la paroi 56. L'ergot précité est en saillie vers l'intérieur sur l'extrémité intérieure de la nervure 52, et l'encoche 58 est formée sur une face arrière de cette nervure 52.

On comprend que l'enjoliveur 50 peut être fixé sur le profilé 24 par un double encliquetage élastique, celui de la patte 54 dans la fente 29 et celui de la nervure 52 au niveau de la nervure 29b3 et de la rainure 30b12.

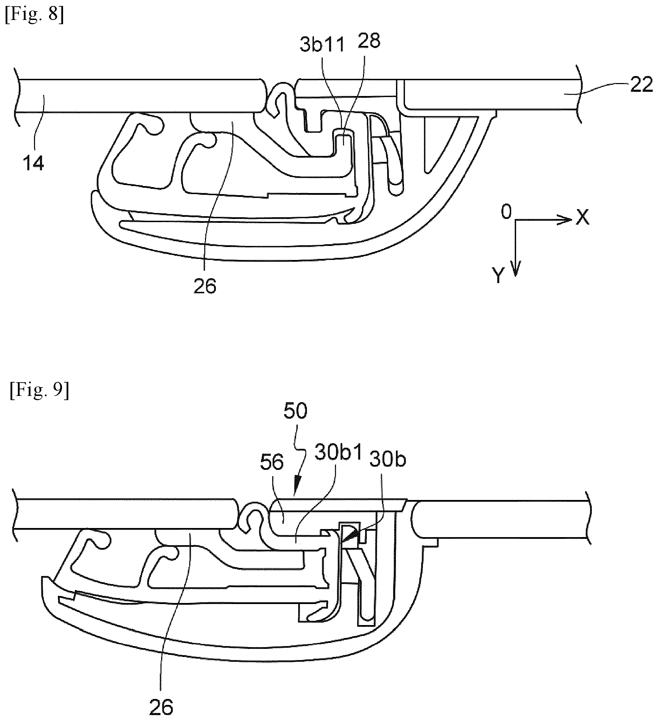

Les figures 7 et 8 illustrent des variantes de réalisation du brin 30b.

Dans la variante de la figure 7, le corps 27a ne comprend pas de partie 29b2. La branche extérieure 30b1 du brin 30b a en section une forme en S et comprend une rainure ascendante 30b11 orientée vers l'intérieur, et une rainure ascendante 30b12 orientée vers l'extérieur et destinée à recevoir la nervure 52 de l'enjoliveur 50. La rainure 30b11 est située entre la branche médiane 30b3 et la rainure 30b12. La nervure 52 de l'enjoliveur 50 ne comporte pas d'ergot ni de rainure 58.

La variante de réalisation de la figure 8 diffère de celle de la figure 7 en ce que le guide 26 comprend au moins un crochet 28 destiné à être engagé dans la rainure 30b11 du brin 30b en vue d'assurer un positionnement correct et une rétention de la vitre 14.

La figure 9 n'illustre pas l'invention.

De manière préférée, lorsqu'une vitre 14 est équipée d'un guide 25 ou 26 qui comprend un crochet 28, l'autre guide 26 ou 25 de cette vitre ne comprend pas un tel crochet, ceci afin de faciliter le montage et le coulissement de la vitre 14 dans la porte 10 et le joint de coulisse 30.

L'invention concerne en outre un procédé de montage de la porte 10, qui comprend (en référence à la figure 2 par exemple) les étapes de :
a) montage du module à vitre fixe encapsulée 20 sur le bâti 11,
b) montage du joint de coulisse 30,
c) montage de la vitre mobile 14, et
d) montage des enjoliveurs 40, 50.

De préférence, lors de l'étape b), le brin supérieur 30c du joint de coulisse 30 est monté sur le rail supérieur 12c par une translation de ce brin supérieur dans une direction sensiblement perpendiculaire à un plan du cadre supérieur du bâti de porte et orientée vers l'intérieur de la porte. Cette direction est schématiquement représentée par deux flèches parallèles dans le dessin. Avantageusement, au moins le second enjoliveur 50 est fixé par encliquetage élastique sur le profilé ascendant 24.

## Revendications

1. Porte (10) de véhicule, comportant :
- un bâti (11) comportant une partie basse (10a) et un cadre supérieur (12) définissant une ouverture (13), ce cadre supérieur comportant deux montants ascendants (12a, 12b) reliés par un rail supérieur (12c),
- un module (20) à vitre fixe encapsulée, ce module ayant une forme générale en P et comportant une vitre fixe (22) montée dans une partie de ladite ouverture, et un profilé ascendant (24) s'étendant le long d'un bord ascendant (22a) de la vitre fixe et s'étendant depuis l'ouverture jusqu'à la partie basse du bâti,
- une vitre mobile (14) apte à fermer le reste de ladite ouverture, cette vitre comportant deux bords ascendants (14a, 14b) le long desquels sont fixés des guides (25, 26),
- un joint de coulisse (30) ayant une forme générale en U et comportant deux brins ascendants (30a, 30b) reliés par un brin supérieur (30c), les brins ascendants ayant en section transversale une forme générale en C et comportant chacun une gorge longitudinale (37) de réception et de guidage d'un desdits guides, un premier (30a) des brins ascendants s'étendant le long d'un premier (12a) des montants ascendants, et un second (30b) des brins ascendants s'étendant le long dudit profilé ascendant (24),
les vitres fixe et mobile comportant des surfaces extérieures (14d, 22d) qui sont alignées entre elles ainsi qu'avec une surface extérieure (40a) d'un premier enjoliveur (40) rapporté sur le premier brin ascendant (30a) et fixé sur ledit premier montant ascendant (12a), et une surface extérieure (50a) d'un second enjoliveur (50) rapporté sur le second brin ascendant (30b) et fixé sur ledit profilé ascendant (24),
ledit profilé ascendant (24) comprenant un corps (27a) en plastique rigide et un revêtement surmoulé (27b) qui est configuré pour fixer le corps plastique à la vitre fixe (22),
ledit corps (27a) comprenant une fente ascendante (29) de réception d'une patte (54) dudit second enjoliveur (50), cette fente (29) s'étendant dans un plan sensiblement perpendiculaire à ladite vitre fixe (22) et comprenant une première paroi latérale (29a) sensiblement alignée avec ledit bord ascendant (22a) ou une portion (27b2) dudit revêtement surmoulé (27b).

2. Porte (10) de véhicule selon la revendication 1, dans lequel ledit corps (27a) comprend une embase de fixation à une surface intérieure (22c) de la vitre fixe (22), ledit revêtement surmoulé (27b) comportant une première portion (27b1) intercalée entre l'embase et la surface intérieure de la vitre fixe, et une seconde portion (27b2) recouvrant ledit bord ascendant (22a) de la vitre fixe.

3. Porte (10) de véhicule selon l'une des revendications précédentes, dans lequel ladite fente (29) comprend une seconde paroi latérale (29b) comportant des orifices (31) d'encliquetage élastique de crochets (56) portés par ladite patte (54).

4. Porte (10) de véhicule selon l'une des revendications précédentes, dans lequel ledit second enjoliveur (50) comprend une paroi (56) s'étendant parallèlement aux vitres fixe (22) et mobile (14), et entre celles-ci, cette paroi comportant ladite surface extérieure (50a) du second enjoliveur.

5. Porte (10) de véhicule selon la revendication précédente, dans lequel la paroi (56) dudit second enjoliveur (50) comprend en outre une surface intérieure (50b) sur laquelle est située en saillie ou en retrait une nervure ascendante (52) sensiblement parallèle audit bord ascendant (22a).

6. Porte (10) de véhicule selon l'une des revendications précédentes, dans lequel lesdits brins ascendants (30a, 30b) comportent chacun une branche extérieure (30a1, 30b1), une branche intérieure (30a2, 30b2) et une branche médiane (30a3, 30b3) de liaison des branches intérieure et extérieure.

7. Porte (10) de véhicule selon la revendication 6, dans lequel la branche extérieure de l'un au moins desdits brins ascendants comporte une première rainure ascendante (30a12, 30b12) orientée vers l'extérieur et dans lequel est au moins en partie engagée une nervure ascendante (42, 52) dudit enjoliveur (40, 50) correspondant.

8. Porte (10) de véhicule selon la revendication 6 ou 7, dans lequel la branche extérieure (30a1, 30b1) de l'un au moins desdits brins ascendants (30a, 30b) comporte une seconde rainure ascendante (30a11, 30b11) orientée vers l'intérieur et dans lequel peut être au moins en partie engagé au moins un crochet (28) d'un desdits guides (25, 26).

9. Porte (10) de véhicule selon l'une des revendications précédentes, dans lequel ledit brin supérieur comprend une agrafe en U de fixation sur ledit rail supérieur.

10. Porte (10) de véhicule selon l'une des revendications précédentes, dans lequel ledit brin supérieur (30c) comprend un prolongement qui s'étend autour d'une partie de la vitre fixe (22) et le long d'un desdits montants ascendants (12b).

11. Porte (10) de véhicule selon l'une des revendications précédentes, dans lequel au moins un desdits premier et second enjoliveurs (40, 50) est réalisé d'une seule pièce à partir de deux matériaux.

12. Véhicule, comportant au moins une porte (10) selon l'une des revendications précédentes.

13. Procédé de montage d'une porte (10) selon l'une des revendications 1 à 11, dans lequel il comprend les étapes de :
a) montage du module (20) à vitre fixe encapsulée sur le bâti (11),
b) montage du joint de coulisse (30),
c) montage de la vitre mobile (14), et
d) montage des premier et second enjoliveurs (40, 50).

14. Procédé selon la revendication précédente, dans lequel, lors de l'étape b), le brin supérieur (30c) du joint de coulisse (30) est monté sur ledit rail supérieur (12c) par une translation de ce brin supérieur dans une direction sensiblement perpendiculaire à un plan du cadre supérieur (12) du bâti (12) de porte et orientée vers l'intérieur de la porte.

15. Procédé selon la revendication 13 ou 14, dans lequel le second enjoliveur (50) est fixé par encliquetage élastique sur ledit profilé ascendant (24).

## Patentansprüche

1. Tür (10) für ein Fahrzeug, umfassend:
- ein Gestell (11), das einen unteren Teil (10a) und einen oberen Rahmen (12) umfasst, der eine Öffnung (13) definiert, wobei dieser obere Rahmen zwei aufsteigende Stützen (12a, 12b) umfasst, die durch eine obere Schiene (12c) verbunden sind,
- ein Modul (20) mit eingekapseltem festem Fenster, wobei dieses Modul eine allgemeine P-förmige Form aufweist und ein festes Fenster (22), das in einem Teil der Öffnung montiert ist, und einen aufsteigenden Träger (24) umfasst, der sich entlang eines aufsteigenden Rands (22a) des festen Fensters erstreckt und sich ausgehend von der Öffnung bis zum unteren Teil des Gestells erstreckt,
- ein bewegliches Fenster (14), das geeignet ist, den Rest der Öffnung zu verschließen, wobei dieses Fenster zwei aufsteigende Ränder (14a, 14b) umfasst, entlang derer Führungen (25, 26) befestigt sind,
- eine Gleitverbindung (30), die eine allgemeine U-förmige Form aufweist und zwei aufsteigende Stränge (30a, 30b) umfasst, die durch einen oberen Strang (30c) verbunden sind, wobei die aufsteigenden Stränge im Querschnitt eine allgemeine C-förmige Form aufweisen und jeweils eine längslaufende Keilrille (37) zur Aufnahme und zur Führung einer der Führungen umfasst, wobei ein erster (30a) der aufsteigenden Stränge sich entlang einer ersten (12a) der aufsteigenden Stützen erstreckt und ein zweiter (30b) der aufsteigenden Stränge sich entlang des aufsteigenden Trägers (24) erstreckt,
wobei das feste und bewegliche Fenster Außenflächen (14d, 22d) umfassen, die untereinander sowie mit einer Außenfläche (40a) einer ersten Radkappe (40), die am ersten aufsteigenden Strang (30a) angebracht ist und an der ersten aufsteigenden Stütze (12a) befestigt ist, und einer Außenfläche (50a) einer zweiten Radkappe (50), die am zweiten aufsteigenden Strang (30b) angebracht ist und am aufsteigenden Träger (24) befestigt ist, ausgerichtet sind,
wobei der aufsteigende Träger (24) einen Körper (27a) aus steifem Kunststoff und eine überformte Verkleidung (27b), die konfiguriert ist, um den Kunststoffkörper am festen Fenster (22) zu befestigen, umfasst,
wobei der Körper (27a) einen aufsteigenden Schlitz (29) zur Aufnahme einer Lasche (54) der zweiten Radkappe (50) umfasst, wobei sich dieser Schlitz (29) in einer Ebene im Wesentlichen senkrecht zum festen Fenster (22) erstreckt und eine erste seitliche Wand (29a) umfasst, die im Wesentlichen mit dem aufsteigenden Rand (22a) oder einem Abschnitt (27b) der überformten Verkleidung (27b2) ausgerichtet ist.

2. Tür (10) für ein Fahrzeug nach Anspruch 1, wobei der Körper (27a) einen Sockel zur Befestigung an einer Innenfläche (22c) des festen Fensters (22) umfasst, wobei die überformte Verkleidung (27b) einen ersten Abschnitt (27b1), der zwischen dem Sockel und der Innenfläche des festen Fensters eingefügt ist, und einen zweiten Abschnitt (27b2), der den aufsteigenden Rand (22a) des festen Fensters verdeckt, umfasst.

3. Tür (10) für ein Fahrzeug nach einem der vorstehenden Ansprüche, wobei der Schlitz (29) eine zweite seitliche Wand (29b) umfasst, die Öffnungen (31) zum elastischen Einrasten von Haken (56), die von der Lasche (54) getragen werden, umfasst.

4. Tür (10) für ein Fahrzeug nach einem der vorstehenden Ansprüche, wobei die zweite Radkappe (50) eine Wand (56) umfasst, die sich parallel zum festen (22) und beweglichen (14) Fenster und zwischen diesen erstreckt, wobei diese Wand die Außenfläche (50a) der zweiten Radkappe umfasst.

5. Tür (10) für ein Fahrzeug nach dem vorstehenden Anspruch, wobei die Wand (56) der zweiten Radkappe (50) weiter eine Innenfläche (50b) umfasst, auf der sich hervorstehend oder versenkt eine aufsteigende Rippe (52) befindet, die im Wesentlichen parallel zum aufsteigenden Rand (22a) ist.

6. Tür (10) für ein Fahrzeug nach einem der vorstehenden Ansprüche, wobei die aufsteigenden Stränge (30a, 30b) jeweils einen äußeren Zweig (30a1,30b1), einen inneren Zweig (30a2, 30b2) und einen mittleren Zweig (30a3, 30b3) zur Verbindung des inneren und äußeren Zweigs umfassen.

7. Tür (10) für ein Fahrzeug nach Anspruch 6, wobei der äußere Zweig des mindestens einen der aufsteigenden Stränge eine erste aufsteigende Rippe (30a12, 30b12) umfasst, die zur Außenseite ausgerichtet ist und in die eine aufsteigende Rippe (42, 52) der entsprechenden Radkappe (40, 50) mindestens teilweise eingreift.

8. Tür (10) für ein Fahrzeug nach Anspruch 6 oder 7, wobei der äußere Zweig (30a1, 30b1) des mindestens einen der aufsteigenden Stränge (30a, 30b) eine zweite aufsteigende Rippe (30a11, 30b11) umfasst, die zur Innenseite ausgerichtet ist und in die mindestens ein Haken (28) einer der Führungen (25, 26) mindestens teilweise eingreifen kann.

9. Tür (10) für ein Fahrzeug nach einem der vorstehenden Ansprüche, wobei der obere Strang eine U-förmige Klammer zur Befestigung auf der oberen Schiene umfasst.

10. Tür (10) für ein Fahrzeug nach einem der vorstehenden Ansprüche, wobei der obere Strang (30c) eine Verlängerung umfasst, die sich um einen Teil des festen Fensters (22) herum und entlang einer der aufsteigenden Stützen (12b) erstreckt.

11. Tür (10) für ein Fahrzeug nach einem der vorstehenden Ansprüche, wobei mindestens eine der ersten und zweiten Radkappe (40, 50) aus einem einzigen Stück ausgehend von zwei Materialien hergestellt ist.

12. Fahrzeug, umfassend mindestens eine Tür (10) nach einem der vorstehenden Ansprüche.

13. Verfahren zur Montage einer Tür (10) nach einem der Ansprüche 1 bis 11, wobei es die folgenden Schritte umfasst:
a) Montage des Moduls (20) mit eingekapseltem festem Fenster auf dem Gestell (11),
b) Montage der Gleitverbindung (30),
c) Montage des beweglichen Fensters (14), und
d) Montage der ersten und zweiten Radkappe (40, 50).

14. Verfahren nach dem vorstehenden Anspruch, wobei beim Schritt b) der obere Strang (30) der Gleitverbindung (30) durch eine Verschiebung dieses oberen Strangs in eine Richtung im Wesentlichen senkrecht zu einer Ebene des oberen Rahmens (12) des Gestells (12) der Tür auf die obere Schiene (12c) montiert wird und zur Innenseite der Tür ausgerichtet wird.

15. Verfahren nach Anspruch 13 oder 14, wobei die zweite Radkappe (50) durch elastisches Einrasten auf dem aufsteigenden Träger (24) befestigt wird.

## Claims

1. A vehicle door (10), comprising:
- a mount (11) comprising a lower part (10a) and an upper frame (12) defining an opening (13), this upper frame comprising two ascending posts (12a, 12b) connected by an upper rail (12c),
- an encapsulated fixed window module (20), said module having a general P-shape and comprising a fixed window (22) mounted in a part of said opening, and an ascending profile (24) extending along an ascending edge (22a) of the fixed window and extending from the opening to the lower part of the mount,
- a movable window (14) capable of closing the remainder of said opening, this window comprising two ascending edges (14a, 14b) along which guides (25, 26) are fixed,
- a sliding joint (30) having a general U-shape and comprising two ascending strands (30a, 30b) connected by an upper strand (30c), the ascending strands having a general C-shape in cross-section and each comprising a longitudinal recess (37) for receiving and guiding one of said guides, a first (30a) of the ascending strands extending along a first (12a) of the ascending posts, and a second (30b) of the ascending strands extending along said ascending profile (24),
the fixed and movable windows comprising outer surfaces (14d, 22d) which are aligned with each other as well as with an outer surface (40a) of a first trim (40) attached to the first ascending strand (30a) and fixed to said first ascending strand (12a), and an outer surface (50a) of a second trim (50) attached to the second ascending strand (30b) and fixed to said ascending profile (24),
said ascending profile (24) comprises a body (27a) made of rigid plastic and an overmolded coating (27b) which is configured to fix the plastic body to the fixed window (22),
said body (27a) comprises an ascending slot (29) for receiving a tab (54) of said second trim (50), said slot (29) extends in a plane substantially perpendicular to said fixed window (22) and comprises a first side wall (29a) substantially aligned with said ascending edge (14a) or a portion (27b2) of said overmolded coating (27b).

2. The vehicle door (10) according to claim 1, wherein said body (27a) comprises a base for attachment to an inner surface (22c) of the fixed window (22), said overmolded coating (27b) comprising a first portion (27b1) interposed between the base and the inner surface of the fixed window, and a second portion (27b2) covering said ascending edge (22a) of the fixed window.

3. The vehicle door (10) according to one of the preceding claims, wherein said slot (29) comprises a second side wall (29b) comprising holes (31) for elastically snap-fastening hooks (56) carried by said tab (54).

4. The vehicle door (10) according to one of the preceding claims, wherein said second trim (50) comprises a wall (56) extending parallel to and between the fixed (22) and movable (14) windows, said wall comprising said outer surface (50a) of the second trim.

5. The vehicle door (10) according to the preceding claim, wherein the wall (56) of said second trim (50) further comprises an inner surface (50b) on which an ascending rib (52) substantially parallel to said ascending edge (22a) projects or recedes.

6. The vehicle door (10) according to one of the preceding claims, wherein said ascending strands (30a, 30b) each comprise an outer branch (30a1, 30b1), an inner branch (30a2, 30b2) and a median branch (30a3, 30b3) for connecting the inner and outer branches.

7. The vehicle door (10) according to claim 6, wherein the outer branch of at least one of said ascending strands comprises a first ascending groove (30a12, 30b12) facing outwardly and in which is at least partially engaged an ascending rib (42, 52) of said corresponding trim (40, 50).

8. The vehicle door (10) according to claim 6 or 7, wherein the outer branch (30a1, 30b1) of at least one of said ascending strands (30a, 30b) comprises a second ascending groove (30a11, 30b11) facing inwardly and into which at least part of at least one hook (28) of one of said guides (25, 26) can be engaged.

9. The vehicle door (10) according to one of the preceding claims, wherein said upper strand comprises a U-shaped clip for attachment to said upper rail.

10. The vehicle door (10) according to one of the preceding claims, wherein said upper strand (30c) comprises an extension extending around a part of the fixed window (22) and along one of said ascending posts (12b).

11. The vehicle door (10) according to one of the preceding claims, wherein at least one of said first and second trims (40, 50) is made of a single piece from two materials.

12. A vehicle, comprising at least one door (10) according to one of the preceding claims.

13. A method of mounting a door (10) according to one of claims 1 to 11, wherein it comprises the steps of:
a) mounting the encapsulated fixed window module (20) on the mount (11),
b) mounting the sliding joint (30),
c) mounting the movable window (14), and
d) mounting the first and second trims (40, 50).

14. The method according to the preceding claim, wherein, in step b), the upper strand (30c) of the sliding joint (30) is mounted on said upper rail (12c) by a translation of this upper strand in a direction substantially perpendicular to a plane of the upper mount (12) of the door frame (12) and oriented towards the inside of the door.

15. The method according to claim 13 or 14, wherein the second trim (50) is fixed by elastic snap-fastening to said ascending profile (24).
